# EUROPEAN PATENT SPECIFICATION

(11) **EP 4 545 339 B1**
(45) Date of publication and mention of the grant of the patent: **09.09.2026**
(21) Application number: 24732153.2
(22) Date of filing: 30.04.2024
(51) Int. Cl.: B60L 1/00, B60L 53/00, B60R 16/03

(54) **VEHICLE POWER DISTRIBUTION INTEGRATED ARCHITECTURE, VEHICLE MANAGEMENT SYSTEM, AND VEHICLE**
INTEGRIERTE FAHRZEUGLEISTUNGSVERTEILUNGSARCHITEKTUR, FAHRZEUGVERWALTUNGSSYSTEM UND FAHRZEUG
ARCHITECTURE INTÉGRÉE DE DISTRIBUTION DE PUISSANCE DE VÉHICULE, SYSTÈME DE GESTION DE VÉHICULE ET VÉHICULE

(30) Priority: 08.09.2023 CN 202311162274
(43) Date of publication of application: 30.04.2025
(73) Proprietor: Contemporary Amperex Intelligence Technology (Shanghai) Limited, Shanghai 201306 (CN)
(72) Inventor: WU, Kai, Pudong New Area Shanghai 201306 (CN); ZHANG, Dapeng, Pudong New Area Shanghai 201306 (CN); ZHOU, Pengfei, Pudong New Area Shanghai 201306 (CN); LI, Xiuling, Pudong New Area Shanghai 201306 (CN); SUN, Yuefu, Pudong New Area Shanghai 201306 (CN)
(74) Representative: Gong, Jinping
(86) International application number: PCT/CN2024/091023
(87) International publication number: WO 2025/050675

(56) References cited:
- EP-A1- 4 015 290
- CN-A- 108 162 764
- CN-A- 111 703 271
- CN-A- 114 312 374
- CN-A- 116 176 458
- CN-U- 207 207 793
- US-A1- 2005 029 867
- US-A1- 2019 168 632
- US-B2- 10 543 757

## Description

This application refers to Chinese Patent Application No.202311162274.6, filed on September 8, 2023 and entitled "VEHICLE POWER DISTRIBUTION INTEGRATION ARCHITECTURE, VEHICLE MANAGEMENT SYSTEM, AND VEHICLE".

### TECHNICAL FIELD

This application relates to the field of vehicle technologies and specifically to a vehicle power distribution integration architecture, a vehicle management system, and a vehicle.

### BACKGROUND

The existing vehicle low-voltage power distribution mainly adopts a technology of independent low-voltage lithium-ion batteries, a fuse box product is equipped for implementing level 1 power distribution for low-voltage loads, and then a battery management system is used for battery management of the low-voltage lithium-ion batteries.

However, in existing power supply architectures, the low-voltage power distribution system and the battery management system are arranged independently, and the fuse box in the low-voltage power distribution system typically adopts a conventional relay or fuse solution, which has problems such as large size, complex wiring, and high maintenance cost. US2005029867A1 discloses a module for managing power in an electrical system of a vehicle.
CN207207793U relates to an automobile -used high pressure collection moulding massing control system of PHEV belongs to hybrid vehicle's technical field.
US10543757B2 discloses a control system for an electrified vehicle having low and high voltage battery systems including a set of vehicle modules that collectively draw an ignition-off draw (IOD) current from the low voltage battery system while the vehicle is off. EP4015290A1 provides an electric vehicle and an integrated controller and an integrated control system therefor.

### TECHNICAL ISSUES

In view of the foregoing problems, this application provides a vehicle power distribution integration architecture, a vehicle management system, and a vehicle, so as to solve the problems of large size, complex wiring, and high maintenance cost caused by independent arrangement of the low-voltage power distribution system and battery management system in existing vehicle power supply architectures.

### TECHNICAL SOLUTION

A first aspect of embodiments of this application provides a vehicle power distribution integration architecture. The vehicle power distribution integration architecture includes a low-voltage battery, a battery management module, a low-voltage power distribution module, and a vehicle radiator plate; where
the low-voltage battery is electrically connected to the low-voltage power distribution module;
the low-voltage power distribution module is provided with a low-voltage load access terminal for connecting to a low-voltage load; and
the battery management module and the low-voltage power distribution module share one controller, where the controller is integrated with a function of managing the low-voltage battery and a function of controlling power distribution of the low-voltage load, the low-voltage power distribution module and the battery management module are integrated on one circuit board, where the circuit board is provided on a first side of the vehicle radiator plate, the low-voltage battery is provided on a second side of the vehicle radiator plate, the second side of the vehicle radiator plate is opposite the first side of the vehicle radiator plate, and the vehicle radiator plate is configured to cool the circuit board and the low-voltage battery.

In the technical solution according to these embodiments of this application, the low-voltage power distribution module is provided with the low-voltage load access terminal for connecting to a low-voltage load, the power output of the low-voltage battery is configured by the low-voltage power distribution module, the battery management module is configured to manage the low-voltage battery, and the battery management module and the low-voltage power distribution module share the same controller. The controller is integrated with a function of managing the low-voltage battery and a function of controlling power distribution of the low-voltage load, so that a battery management solution and a low-voltage power distribution control solution in the power electronics field are creatively integrated into one controller. Shared use of some components simplifies the control wiring and has characteristics such as low costs and simple structure.

In some embodiments, the vehicle power distribution integration architecture further includes:
a low-voltage power source input terminal electrically connected to the low-voltage power distribution module and configured for connecting to a low-voltage power source obtained through conversion of a traction battery; and
the low-voltage power distribution module is further configured to allocate power for the low-voltage power source.

In the technical solution according to these embodiments of this application, the low-voltage power source input terminal is configured for connecting to a low-voltage power source obtained through voltage conversion of a traction battery, and the low-voltage power distribution module allocates the low-voltage power source for the low-voltage load access terminal. For example, in the case of multiple low-voltage load access terminals, power can be allocated based on power demands of all low-voltage loads connected to the low-voltage load access terminals or based on operating states of the connected low-voltage loads, so as to dynamically adjust the output power of the low-voltage power source and protect the battery and the low-voltage loads.

In some embodiments, the battery management module includes a first switch module controlled by the controller; where
the first switch module is configured to manage a charging/discharging process of the low-voltage battery under the control of the controller.

In the technical solution according to these embodiments of this application, the first switch module is controlled by the controller, and the controller controls the ON/OFF state of the first switch module to charge or discharge the low-voltage battery, so that the first switch module can also be used by the low-voltage power distribution module. This reduces the wiring harnesses between the low-voltage power distribution module and the battery management module, thereby reducing safety hazards caused by short circuit of a wiring harness between different circuit boards.

In some embodiments, the low-voltage battery is electrically connected to the low-voltage power distribution module through the first switch module.

In the technical solution according to these embodiments of this application, the first switch module is connected between the low-voltage battery and the low-voltage power distribution module, the low-voltage battery is electrically connected to the low-voltage power distribution module through the first switch module, the first switch module is controlled by the controller, and the controller controls the ON/OFF states of the low-voltage battery and the low-voltage power distribution module by controlling the ON/OFF state of the first switch module. The first switch module controls the power distribution output of the low-voltage power distribution module, so that the first switch module can be shared by the low-voltage power distribution module and the battery management module. This reduces the wiring harnesses between the low-voltage power distribution module and the battery management module, thereby reducing safety hazards caused by short circuit of a wiring harness between different circuit boards.

In some embodiments, the low-voltage power distribution module further includes a second switch module controlled by the controller; where
the second switch module is configured to control an input state of the low-voltage power source input terminal.

In the technical solution according to these embodiments of this application, the second switch module is controlled by the controller, and can control the input state of the low-voltage power source input terminal, so as to control the power distribution output of the low-voltage power distribution module. For example, the low-voltage power source input terminal can be controlled to charge the low-voltage battery, or at least one of the low-voltage power source input terminal and the low-voltage battery can be controlled to supply power to the low-voltage load access terminal, so as to implement integrated control of the battery management module and the low-voltage power distribution module.

In some embodiments, the second switch module is connected between the low-voltage power source input terminal and the low-voltage load access terminal; and/or
the second switch module is connected between the low-voltage power source input terminal and the battery management module.

In the technical solution according to these embodiments of this application, the second switch module is controlled by the controller, and can control the input state of the low-voltage power source input terminal, so as to control the power distribution output of the low-voltage power distribution module. For example, the low-voltage power source input terminal can be controlled to charge the low-voltage battery, or at least one of the low-voltage power source input terminal and the low-voltage battery can be controlled to supply power to the low-voltage load access terminal, so as to implement integrated control of the battery management module and the low-voltage power distribution module.

In some embodiments, the low-voltage power distribution module further includes a third switch module controlled by the controller; where
the third switch module is configured to control a direction of current between the low-voltage power source input terminal and the low-voltage battery.

In some embodiments, the third switch module is connected between the second switch module and the first switch module.

In the technical solution according to these embodiments of this application, the third switch module is controlled by the controller and connected between the second switch module and the first switch module. The controller can control the ON/OFF states of the first switch module, the second switch module, and the third switch module. The low-voltage power source input terminal can be controlled to charge the low-voltage battery, or at least one of the low-voltage power source input terminal and the low-voltage battery can be controlled to supply power to the low-voltage load access terminal, so that the direction of current between the low-voltage power source input terminal and the low-voltage battery can be controlled by the third switch module, implementing integrated control over the power output of the battery management module and the low-voltage power distribution module.

In some embodiments, the low-voltage load access terminal includes a first low-voltage load access terminal and a second low-voltage load access terminal; where
the first low-voltage load access terminal and the second low-voltage load access terminal are connected to a first terminal and a second terminal of the third switch module respectively.

In the technical solution according to these embodiments of this application, the first low-voltage load access terminal and the second low-voltage load access terminal are connected to the first terminal and the second terminal of the third switch module respectively. The controller can control the ON/OFF states of the first switch module, the second switch module, and the third switch module, so that the direction of current between the low-voltage power source input terminal and the low-voltage battery can be controlled by the third switch module, implementing integrated control over the power output of the battery management module and the low-voltage power distribution module.

In some embodiments, the low-voltage power distribution module further includes:
a fourth switch module connected between the first terminal of the third switch module and the first low-voltage load access terminal and controlled by the controller; and
a fifth switch module connected to the second terminal of the third switch module and the second low-voltage load access terminal and controlled by the controller.

In the technical solution according to these embodiments of this application, multiple first low-voltage load access terminals can be provided for connecting to multiple low-voltage loads, the fourth switch module is arranged between each of the first low-voltage load access terminals and the second switch module, and the fourth switch module controls the power-on state of a corresponding first low-voltage load access terminal. Multiple second low-voltage load access terminals are provided for connecting to multiple low-voltage loads, the fifth switch module is arranged between each of the second low-voltage load access terminals and the third switch module, and the fifth switch module controls the power-on state of a corresponding second low-voltage load access terminal.

In the technical solution according to these embodiments of this application, since the battery management module and the low-voltage power distribution module share the same controller, the same controller is used for the battery management module and low-voltage power distribution. The controller and some of its peripheral driver components form the battery management module for managing a state of the low-voltage battery, and the controller and others of its peripheral driver components form the low-voltage power distribution module for controlling the power distribution of the low-voltage load connected to the low-voltage load access terminal. The low-voltage power distribution module and the battery management module are integrated on the same circuit board, and the controller and its peripheral driver components that need to be controlled are integrated on the same circuit board. This helps simplify the wiring and reduce the failure probability of wiring harnesses.

In the technical solution according to these embodiments of this application, the low-voltage battery and the circuit board are arranged on two sides of the same vehicle radiator plate respectively. The low-voltage battery and the circuit board share one vehicle radiator plate, which can improve the cooling efficiency of the vehicle radiator plate and reduce the volume of the vehicle.

In some embodiments, the controller has at least two kernels.

In the technical solution according to these embodiments of this application, the controller has at least two kernels, so multiple functions of the controller can be assigned to multiple kernels, improving the processing efficiency of the controller.

In some embodiments, at least one kernel of the controller is configured to process a sampling signal for obtaining sampling data, and at least one kernel of the controller is configured to generate control data based on the sampling data, and output a corresponding control signal based on the control data to control an operating state of the low-voltage battery and/or control distributed power of the low-voltage load.

In the technical solution according to these embodiments of this application, the controller includes at least two kernels. One or some of the kernels can be configured to process the sampling signal for obtaining corresponding sampling data, and the other one or others of the kernels can be configured to process the sampling data, obtain control data based on a preset operation, generate a control signal based on the control data, output the control signal to a peripheral driver component, and control the operating state of the low-voltage battery by controlling the operating state of the driver component and/or control distributed power of the low-voltage load by controlling the operating state of the driver component.

In some embodiments, the vehicle power distribution integration architecture includes:
an SBC power supply module connected to the controller and configured to supply power to the controller.

In the technical solution according to these embodiments of this application, the SBC power supply module is integrated in the battery management module. The SBC power supply module is configured to supply power to the controller, and a power source of the SBC power supply module may be the low-voltage battery.

In some embodiments, a power source input terminal of the SBC power supply module is connected to both the low-voltage battery and the low-voltage power source input terminal, and a power source output terminal of the SBC power supply module is connected to the controller.

In the technical solution according to these embodiments of this application, the power source input terminal of the SBC power supply module can draw power from the low-voltage battery or the low-voltage power source input terminal, and the voltage input from the low-voltage battery or the low-voltage power source input terminal is converted into a power supply voltage of the controller, so that power is supplied to the controller. This avoids the problem that the controller requires an extra wiring harness for drawing power from an external power source.

In some embodiments, the vehicle power distribution integration architecture further includes:
a sampling module configured to perform voltage sampling and/or current sampling on sampling nodes of the low-voltage battery, battery management module, and low-voltage power distribution module and generate sampling signals; where
the controller is connected to the sampling module, and the controller is further configured to control an operating state of the low-voltage battery based on the sampling signals.

In the technical solution according to these embodiments of this application, multiple sampling nodes are provided on the low-voltage battery, the battery management module, and the low-voltage power distribution module, and voltages or currents of the sampling nodes are sampled to obtain sampling signals, and based on the received sampling signals, the controller determines whether the voltages or currents of the sampling nodes corresponding to the sampling signals satisfy the operating conditions of the current operating states, so as to control the operating state of the low-voltage battery and the operating state of the low-voltage power distribution module. In this way, the low-voltage battery and the low-voltage power distribution module can adjust their operating states in real time based on electrical parameters of the low-voltage battery, the battery management module, and the low-voltage power distribution module, reducing safety hazards caused by line faults.

In some embodiments, in a case that multiple low-voltage electric loads are connected to the low-voltage load access terminal, the controller controls multiple low-voltage load access terminals of the low-voltage power distribution module to be powered on in a time-sharing manner.

In the technical solution according to these embodiments of this application, the multiple low-voltage load access terminals of the low-voltage power distribution module can be connected to the multiple low-voltage electric loads respectively. In a case that multiple low-voltage electric loads are connected, the controller controls multiple low-voltage load access terminals to be powered on in a time-sharing manner. This can increase the output current of the low-voltage power distribution module and avoid safety hazards caused by an excessively high output current due to simultaneous power-on of the multiple low-voltage load access terminals.

In some embodiments, the vehicle power distribution integration architecture further includes an AFE module connected to the low-voltage battery and the controller and configured to collect information of the low-voltage battery and exchange information with the controller; where the controller is connected to the AFE module through a non-multiplexed synchronous serial communication interface.

In the technical solution according to these embodiments of this application, the AFE module is connected to both the low-voltage battery and the controller. The AFE module can be used to collect the information of the low-voltage battery and exchange information with the controller. The controller is connected to the AFE module through a non-multiplexed synchronous serial communication interface, so that high-speed full-duplex communication can be established between the controller and the AFE module, and data pins of the controller execute data transmission of a specified type. For example, each communication module corresponds to one interactive function module, without being affected by other pins or modules.

A second aspect of embodiments of this application further provides a vehicle management system. The vehicle management system includes the vehicle power distribution integration architecture according to any one of the foregoing embodiments.

A third aspect of embodiments of this application further provides a vehicle. The vehicle includes the vehicle power distribution integration architecture according to any one of the foregoing embodiments.

The foregoing description is merely an overview of the technical solutions in this application. In order to better understand the technical means in this application, to achieve implementation according to content of the specification, and to make the foregoing and other objects, features, and advantages in this application more obvious and easy to understand, the following describes specific embodiments of this application.

### BENEFICIAL EFFECTS

In the technical solution according to some embodiments of this application, the vehicle power distribution integration architecture according to any one of the foregoing embodiments is integrated in a vehicle, so that the low-voltage power distribution module and the battery management module can be integrated in one structural member, and the low-voltage power distribution module and the battery management module use the same controller. This optimizes the electrical architecture of the vehicle management system, simplifies relevant components of the entire vehicle, and greatly reduces the cost of the entire vehicle.

### BRIEF DESCRIPTION OF DRAWINGS

Persons of ordinary skill in the art can clearly understand various other advantages and benefits by reading the detailed description of the preferred embodiments below. The accompanying drawings are merely intended to illustrate the purposes of the preferred embodiments, and should not be construed as a limitation on this application. In addition, in all the accompanying drawings, same parts are denoted by same reference signs. In the accompanying drawings:
FIG. 1 is a first schematic structural diagram of a vehicle power distribution integration architecture provided in an embodiment of this application;
FIG. 2 is a second schematic structural diagram of a vehicle power distribution integration architecture provided in an embodiment of this application;
FIG. 3 is a third schematic structural diagram of a vehicle power distribution integration architecture provided in an embodiment of this application;
FIG. 4 is a fourth schematic structural diagram of a vehicle power distribution integration architecture provided in an embodiment of this application;
FIG. 5 is a fifth schematic structural diagram of a vehicle power distribution integration architecture provided in an embodiment of this application;
FIG. 6 is a sixth schematic structural diagram of a vehicle power distribution integration architecture provided in an embodiment of this application;
FIG. 7 is a seventh schematic structural diagram of a vehicle power distribution integration architecture provided in an embodiment of this application;
FIG. 8 is an eighth schematic structural diagram of a vehicle power distribution integration architecture provided in an embodiment of this application;
FIG. 9 is a ninth schematic structural diagram of a vehicle power distribution integration architecture provided in an embodiment of this application;
FIG. 10 is a tenth schematic structural diagram of a vehicle power distribution integration architecture provided in an embodiment of this application;
FIG. 11 is an eleventh schematic structural diagram of a vehicle power distribution integration architecture provided in an embodiment of this application; and
FIG. 12 is a twelfth schematic structural diagram of a vehicle power distribution integration architecture provided in an embodiment of this application.

### DESCRIPTIONS OF EMBODIMENTS

The following describes in detail the embodiments of technical solutions of this application with reference to the accompanying drawings. The following embodiments are merely intended for a clearer description of the technical solutions of this application and therefore are just used as examples which do not constitute any limitations on the protection scope of this application.

Unless otherwise defined, all technical and scientific terms used herein shall have the same meanings as commonly understood by those skilled in the art to which this application belongs. The terms used herein are intended to merely describe the specific embodiments rather than to limit this application. The terms "include", "comprise", and "have" and any other variations thereof in the specification, claims and brief description of drawings of this application are intended to cover non-exclusive inclusions.

In the description of some embodiments of this application, the terms "first", "second" and the like are merely intended to distinguish between different objects, and shall not be understood as any indication or implication of relative importance or any implicit indication of the number, sequence or primary-secondary relationship of the technical features indicated. In the description of some embodiments of this application, "multiple" means at least two unless otherwise specifically stated.

In this specification, reference to "embodiment" means that specific features, structures or characteristics described with reference to the embodiment may be incorporated in at least one embodiment of this application. The word "second connecting port" appearing in various places in the specification does not necessarily refer to the same embodiment, or an independent or alternative embodiment that is exclusive of other embodiments. It is explicitly or implicitly understood by persons skilled in the art that the embodiments described herein may be combined with other embodiments.

In the description of the embodiments of this application, the term "and/or" is only an associative relationship for describing associated objects, indicating that three relationships may be present. For example, A and/or B may indicate the following three cases: presence of only A, presence of both A and B, and presence of only B. In addition, a character "/" in this specification generally indicates an "or" relationship between contextually associated objects.

In the description of some embodiments of this application, the term "multiple frames" refers to more than two (including two).

In the description of some embodiments of this application, the orientations or positional relationships indicated by the technical terms "center", "longitudinal", "transverse", "length", "width", "thickness", "upper", "lower", "front", "rear", "left", "right", "vertical", "horizontal", "top", "bottom", "inside", "outside", "clockwise", "counterclockwise", "axial", " radial", "circumferential", and the like are based on the orientations or positional relationships as shown in the accompanying drawings. These terms are merely for ease and brevity of description of the embodiments of this application rather than indicating or implying that the means or components mentioned must have specific orientations or must be constructed or manipulated according to specific orientations, and therefore shall not be construed as any limitations on embodiments of this application.

In related technologies, vehicle low-voltage power distribution mainly adopts a technology of separate low-voltage lithium-ion batteries. For example, fuse boxes are configured based on the lithium-ion batteries to implement level 1 power distribution for low-voltage loads in the vehicle, and the fuse boxes generally use components such as relays and fuses as driver components and protection components. However, for existing entire-vehicle power supply, regional controllers are generally used to control respective functional modules of the entire vehicle. Therefore, each functional module needs an independent controller for processing data and controlling components in the functional module. Similarly, each functional module further needs an independent SBC module for supplying power to the controller and an independent AFE module for establishing communication between the control module and a host computer. The related control architecture not only requires a large number of wiring harnesses, but also has problems of large size and maintenance inconvenience.

To solve the foregoing technical problems, an embodiment of this application provides a vehicle power distribution integration architecture. The vehicle power distribution integration architecture includes a low-voltage battery 300, a battery management module 100, and a low-voltage power distribution module 200. The low-voltage battery 300 is electrically connected to the low-voltage power distribution module 200, and the low-voltage power distribution module 200 is provided with a low-voltage load access terminal 210 for connecting to a low-voltage load. The battery management module 100 and the low-voltage power distribution module 200 share one controller 120, where the controller 120 is integrated with a function of managing the low-voltage battery 300 and a function of controlling power distribution of the low-voltage load.

In this embodiment, the low-voltage power distribution module 200 is provided with the low-voltage load access terminal 210 for connecting to the low-voltage load, the low-voltage power distribution module 200 is connected to the low-voltage battery 300, the power output of the low-voltage battery 300 is configured by the low-voltage power distribution module 200, the battery management module 100 is configured to manage the low-voltage battery 300, and the battery management module 100 and the low-voltage power distribution module 200 share the same controller 120. In this case, the battery management module 100 and the low-voltage power distribution module 200 include the same controller 120. The controller 120 is integrated with the function of managing the low-voltage battery 300 and the function of controlling power distribution of the low-voltage load, so that control modules in a battery management solution and a low-voltage power distribution solution in the power electronics field are creatively integrated into one controller 120. In addition, shared use of some components simplifies the control wiring and therefore the circuit design, commissioning, and installation of the entire vehicle are simplified accordingly. Compared with a case that the battery management solution and low-voltage power distribution solution are arranged independently, this architecture has the characteristics such as low costs, simple structure, and lower failure rate.

In some specific application embodiments, in the vehicle low-voltage power distribution system, the controller 120 and some power components form the battery management module 100, and the controller 120 and other power components form the low-voltage power distribution module 200, thereby integrating the low-voltage power distribution systems of the entire vehicle. In this way, the vehicle low-voltage power distribution system can be controlled and managed by using one controller 120, optimizing energy management of the entire low-voltage power distribution system and improving the electric energy utilization efficiency and power supply stability of the low-voltage power distribution system of the entire vehicle.

In some specific application embodiments, because the controller 120 and some power components form the battery management module 100, and the controller 120 and other power components form the low-voltage power distribution module 200, a large fuse box is not required and the battery management module 100, the low-voltage power distribution module 200, and the low-voltage battery 300 can be further integrated into a low-voltage battery assembly. This not only reduces the volume of the vehicle low-voltage power distribution system, but also shortens the wiring distance between the low-voltage battery 300 and the battery management module 100 and the wiring distance between the low-voltage battery 300 and the low-voltage power distribution module 200, thereby reducing the probability of power supply failure and communication wiring failure in the vehicle low-voltage power distribution system.

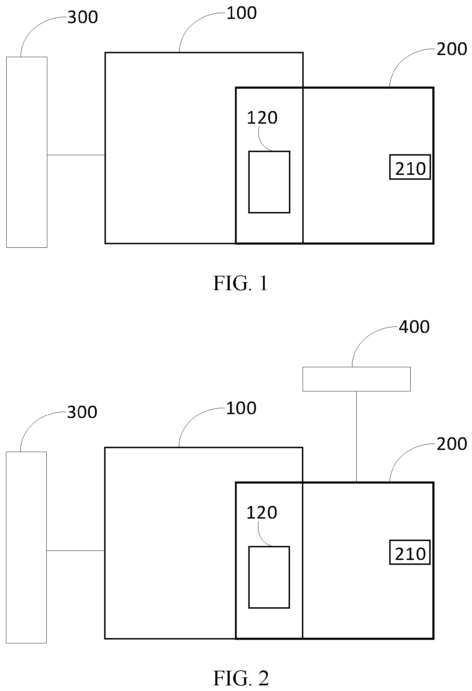

In some embodiments, as shown in FIG. 2, the vehicle power distribution integration architecture in this embodiment further includes a low-voltage power source input terminal 400. The low-voltage power source input terminal 400 is electrically connected to the low-voltage power distribution module 200 and can be configured for connecting to a low-voltage power source obtained through conversion of a traction battery, and the low-voltage power distribution module 200 allocates power for the connected low-voltage power source.

In these embodiments, the low-voltage power source input terminal 400 is configured for connecting to the low-voltage power source obtained through voltage conversion of the traction battery, and the low-voltage power distribution module 200 allocates the low-voltage power source for the low-voltage load access terminal 210. For example, in the case of multiple low-voltage load access terminals 210, power can be allocated based on power demands of all low-voltage loads connected to the low-voltage load access terminals 210 or based on operating states of the connected low-voltage loads, so as to dynamically adjust the output power of the low-voltage power source and protect the battery and the low-voltage loads.

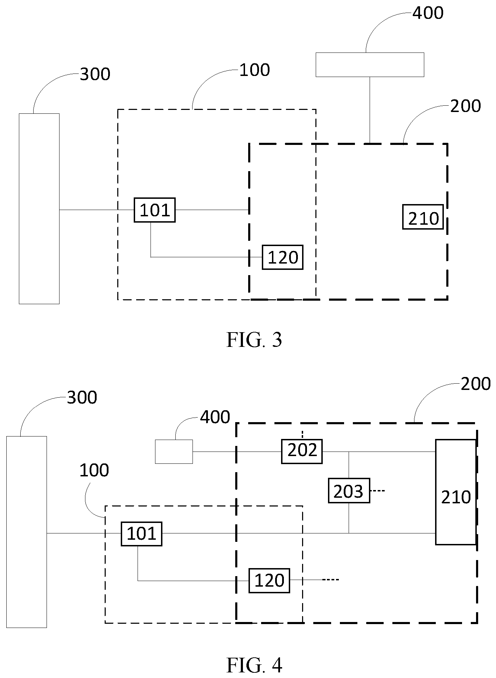

In some embodiments, as shown in FIG. 3, the battery management module 100 includes a first switch module 101, and the first switch module 101 is configured to manage a charging/discharging process of the low-voltage battery 300 under the control of the controller 120.

In these embodiments, the first switch module 101 is controlled by the controller 120, and the controller 120 controls the ON/OFF state of the first switch module 101 to charge or discharge the low-voltage battery 300, so that the low-voltage power distribution module 200 can use the first switch module 101 as its power distribution management unit. In this way, no power distribution management component needs to be provided in the low-voltage power distribution module 200. In addition, wiring harnesses between the low-voltage power distribution module 200 and the battery management module 100 are reduced, thereby reducing safety hazards caused by short circuit of a wiring harness between different circuit boards.

In some embodiments, the low-voltage battery 300 is electrically connected to the low-voltage power distribution module 200 through the first switch module 101.

In these embodiments, the first switch module 101 is connected between the low-voltage battery 300 and the low-voltage power distribution module 200, the low-voltage battery 300 is electrically connected to the low-voltage power distribution module 200 through the first switch module 101, the first switch module 101 is controlled by the controller 120, and the controller 120 controls the ON/OFF states of the low-voltage battery 300 and the low-voltage power distribution module 200 by controlling the ON/OFF state of the first switch module 101. The first switch module 101 controls the power distribution output of the low-voltage power distribution module 200, so that the low-voltage power distribution module 200 and the battery management module 100 can share the first switch module 101. This reduces the wiring harnesses between the low-voltage power distribution module 200 and the battery management module 100, thereby reducing safety hazards caused by short circuit of a wiring harness between different circuit boards.

In some embodiments, as shown in FIG. 4, the low-voltage power distribution module 200 further includes a second switch module 202 controlled by the controller 120. The second switch module 202 is configured to control an input state of the low-voltage power source input terminal 400.

In these embodiments, the second switch module 202 is controlled by the controller 120, and can control an input state of the low-voltage load access terminal 210, so as to control the power distribution output of the low-voltage power distribution module 200. For example, the low-voltage power source input terminal 400 can be controlled to charge the low-voltage battery 300, or at least one of the low-voltage power source input terminal 400 and the low-voltage battery 300 can be controlled to supply power to the low-voltage load access terminal 210, so as to implement integrated control of the battery management module 100 and the low-voltage power distribution module 200.

In some embodiments, the second switch module 202 is connected between the low-voltage power source input terminal 400 and the low-voltage load access terminal 210.

In some embodiments, the second switch module 202 is connected between the low-voltage power source input terminal 400 and the battery management module 100.

In these embodiments, the second switch module 202 is controlled by the controller 120, and can control the input state of the low-voltage power source input terminal 400, so as to control the power distribution output of the low-voltage power distribution module 200. For example, the low-voltage power source input terminal 400 can be controlled to charge the low-voltage battery 300, or at least one of the low-voltage power source input terminal 400 and the low-voltage battery 300 can be controlled to supply power to the low-voltage load access terminal 210, so as to implement integrated control of the battery management module 100 and the low-voltage power distribution module 200.

In some embodiments, as shown in FIG. 4, the low-voltage power distribution module 200 further includes a third switch module 203. The third switch module 203 is controlled by the controller 120. The third switch module 203 is configured to control a direction of current between the low-voltage power source input terminal 400 and the low-voltage battery 300 under the control of the controller 120.

In some embodiments, the third switch module 203 is connected between the second switch module 202 and the first switch module 101.

In these embodiments, the third switch module 203 is controlled by the controller 120 and connected between the second switch module 202 and the first switch module 101. The controller 120 can control the ON/OFF states of the first switch module 101, the second switch module 202, and the third switch module 203. The low-voltage power source input terminal 400 can be controlled to charge the low-voltage battery 300, or at least one of the low-voltage power source input terminal 400 and the low-voltage battery 300 can be controlled to supply power to the low-voltage load access terminal 210, so that the direction of current between the low-voltage power source input terminal 400 and the low-voltage battery 300 can be controlled by the third switch module 203, implementing integrated control over the power output of the battery management module 100 and the low-voltage power distribution module 200.

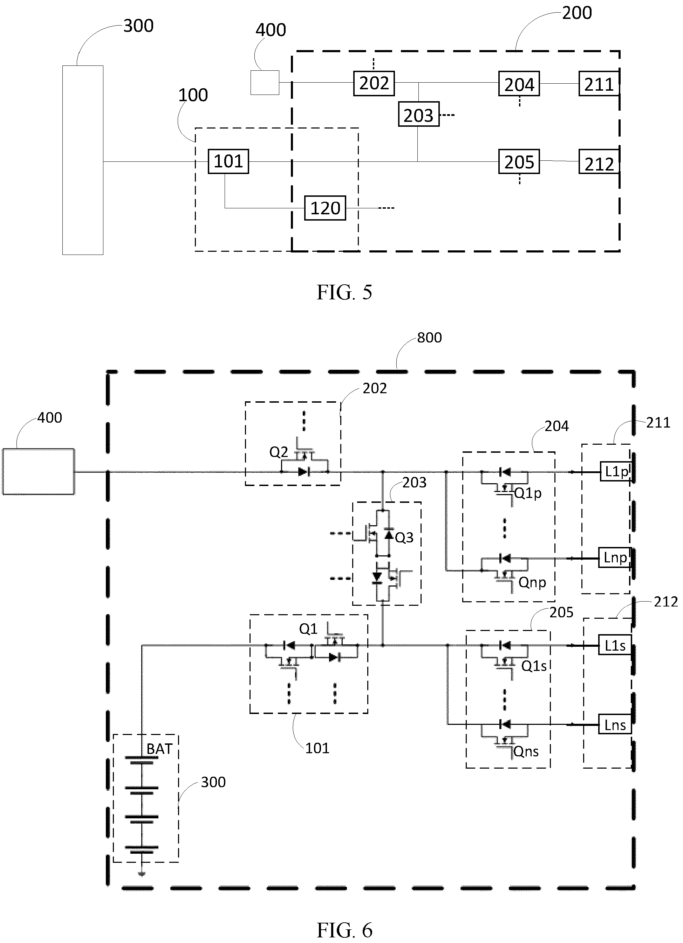

In some embodiments, as shown in FIG. 5, the low-voltage load access terminal 210 includes a first low-voltage load access terminal 211 and a second low-voltage load access terminal 212. The first low-voltage load access terminal 211 and the second low-voltage load access terminal 212 are connected to a first terminal and a second terminal of the third switch module 203 respectively.

In these embodiments, the first low-voltage load access terminal 211 and the second low-voltage load access terminal 212 are connected to the first terminal and the second terminal of the third switch module 203 respectively. The controller 120 can control the ON/OFF states of the first switch module 101, the second switch module 202, and the third switch module 203, so that the direction of current between the low-voltage power source input terminal 400 and the low-voltage battery 300 can be controlled by the third switch module 203, implementing integrated control over the power output of the battery management module 100 and the low-voltage power distribution module 200.

In some embodiments, as shown in FIG. 5, the low-voltage power distribution module 200 further includes a fourth switch module 204 and a fifth switch module 205. The fourth switch module 204 is connected between the first terminal of the third switch module 203 and the first low-voltage load access terminal 211, and the fourth switch module 204 is controlled by the controller 120. The fifth switch module 205 is connected to the second terminal of the third switch module 203 and the second low-voltage load access terminal 212, and the fifth switch module 205 is controlled by the controller 120.

In these embodiments, the first low-voltage load access terminal 211 is connected to the first terminal of the third switch module 203 through the fourth switch module 204, and the second low-voltage load access terminal 212 is connected to the second terminal of the third switch module 203 through the fifth switch module 205. The fourth switch module 204 controls the power-on state of the corresponding first low-voltage load access terminal 211, and the fifth switch module 205 controls the power-on state of the corresponding second low-voltage load access terminal 212, thereby implementing independent control and management of each low-voltage load.

In some embodiments, the fourth switch module 204 and the fifth switch module 205 are both MOS components.

In some embodiments, the first low-voltage load access terminal 211 and the fourth switch module 204 are provided in plurality, and the first low-voltage load access terminals 211 and the fourth switch modules 204 are arranged on a one-to-one basis. The second low-voltage load access terminal 212 and the fifth switch module 205 are provided in plurality, and the second low-voltage load access terminals 212 and the fifth switch modules 205 are arranged on a one-to-one basis.

In these embodiments, multiple first low-voltage load access terminals 211 can be provided for connecting to multiple low-voltage loads, the fourth switch module 204 is arranged between each of the first low-voltage load access terminals 211 and the second switch module 202, and the fourth switch module 204 controls the power-on state of the corresponding first low-voltage load access terminal 211. Multiple second low-voltage load access terminals 212 are provided for connecting to multiple low-voltage loads, the fifth switch module 205 is arranged between each of the second low-voltage load access terminals 212 and the third switch module 203, and the fifth switch module 205 controls the power-on state of the corresponding second low-voltage load access terminal 212, thereby implementing independent control and management of each low-voltage load.

In an embodiment, as shown in FIG. 6, the low-voltage battery 300 may be formed by multiple battery units BATs.

In an embodiment, as shown in FIG. 6, in a vehicle power distribution integration architecture 800 according to this embodiment, the first switch module 101 includes a first switch tube Q1, and the first switch tube Q1 may be a bidirectional switch component. A first terminal of the first switch tube Q1 is connected to the low-voltage battery 300, a second terminal of the first switch tube Q1 is connected to the second terminal of the third switch module 203, and two control terminals of the first switch tube Q1 are both connected to the controller 120. The bidirectional switch component is controlled by the controller 120 and can control charging/discharging of the low-voltage battery 300. The second terminal of the third switch module 203 is connected to the low-voltage battery 300 through the first switch module 101. In a case that the first switch module 101 is in a first ON condition, the low-voltage battery 300 supplies power to the first low-voltage load access terminal 211 or the second low-voltage load access terminal 212 through the first switch module 101. At this time, the low-voltage power source input terminal 400 cannot charge the low-voltage battery 300.

In a case that the first switch module 101 is in a second ON condition, the low-voltage power source input terminal 400 charges the low-voltage battery 300 through the first switch module 101.

In a case that the first switch module 101 is in an OFF condition, the low-voltage battery 300 is disconnected from the third switch module 203 and the fifth switch module 205.

In some embodiments, the first switch tube Q1 may be a MOS component.

In some embodiments, as shown in FIG. 6, the third switch module 203 includes a third switch tube Q3. A first terminal and a second terminal of the third switch tube Q3 are used as the first terminal and the second terminal of the third switch module 203 respectively. The third switch tube Q3 may be a bidirectional switch component, and two control terminals of the third switch tube Q3 are both connected to the controller 120. In a case that the first switch module 101 is in the first ON condition and the third switch module 203 is in the first ON condition, the low-voltage battery 300 supplies power to the first low-voltage load access terminal 211 through the first switch module 101 and the third switch module 203. At this time, the low-voltage power source input terminal 400 can also supply power to the first low-voltage load access terminal 211 through the second switch module 202, but the current output by the low-voltage power source input terminal 400 cannot pass through the third switch module 203.

In an embodiment, the first low-voltage load access terminal 211 can be connected to a high-power low-voltage load. Because the battery management module 100 and the low-voltage power distribution module 200 are integrated on one circuit board 123, when the controller 120 detects that the output power of the low-voltage power source input terminal 400 cannot reach the power required by the first low-voltage load access terminal 211, the first switch module 101 and the third switch module 203 can be controlled to be in the first ON condition, so that the low-voltage battery 300 performs power compensation on the high-power low-voltage load connected to the first low-voltage load access terminal 211, avoiding the problem of unstable power supply caused by excessive power of the low-voltage load connected.

In some embodiments, the third switch tube Q3 may be a MOS component.

In some embodiments, as shown in FIG. 6, the second switch module 202 includes a second switch tube Q2. A first terminal of the second switch tube Q2 is connected to the low-voltage power source input terminal 400, a second terminal of the second switch tube Q2 is connected to the first low-voltage load access terminal 211 through the fourth switch module 204, or the second terminal of the second switch tube Q2 is connected to the first terminal of the third switch module 203. Control terminals of the second switch tube Q2 are connected to the controller 120, and the second switch tube Q2 is switched on or off based on a control signal transmitted by the controller 120.

In some embodiments, the second switch tube Q2 may be a MOS component.

In some embodiments, as shown in FIG. 6, the fourth switch module 204 includes multiple switch components (switch component Q1p, ..., and switch component Qnp), the first low-voltage load access terminal 211 includes multiple load access terminals (load access terminal L1p, ..., and load access terminal Lnp), and the multiple load access terminals (load access terminal L1p, ..., and load access terminal Lnp) are connected to the first terminal of the third switch module 203 through the multiple switch components (switch component Q1p, ..., and switch component Qnp) respectively. The multiple switch components (switch component Q1p, ..., and switch component Qnp) are all controlled by the controller 120, and the controller 120 controls the ON/OFF state of each switch component, so as to manage the power distribution for the low-voltage load connected to each load access terminal.

In some embodiments, as shown in FIG. 6, the fifth switch module 205 includes multiple switch components (switch component Q1s, ..., and switch component Qns), the second low-voltage load access terminal 212 includes multiple load access terminals (load access terminal L1s, ..., and load access terminal Lns), and the multiple load access terminals (load access terminal L1s, ..., and load access terminal Lns) are connected to the second terminal of the third switch module 203 through the multiple switch components (switch component Q1s, ..., and switch component Qns) respectively. The multiple switch components (switch component Q1s, ..., and switch component Qns) are all controlled by the controller 120, and the controller 120 controls the ON/OFF state of each switch component, so as to manage the power distribution for the low-voltage load connected to each load access terminal.

In some embodiments, the switch components Q1s, ..., Qns, Q1s, ..., and Qns are all MOS components.

In some embodiments, the first switch tube Q1, the second switch tube Q2, the third switch tube Q3, the switch component Q1s, ..., and the switch component Qns are all MOS components, and the first switch tube Q1, the second switch tube Q2, the third switch tube Q3, the switch component Q1s, ..., the switch component Qns, and the controller 120 are integrated on the same circuit board. This reduces the communication harnesses between an independent low-voltage power distribution system and an independent thermal management system, and an independent controller and related SBC power supply chip are not required, reducing the quantity of chips used and reducing the probability of power supply failure and communication wiring failure in the vehicle low-voltage power distribution system.

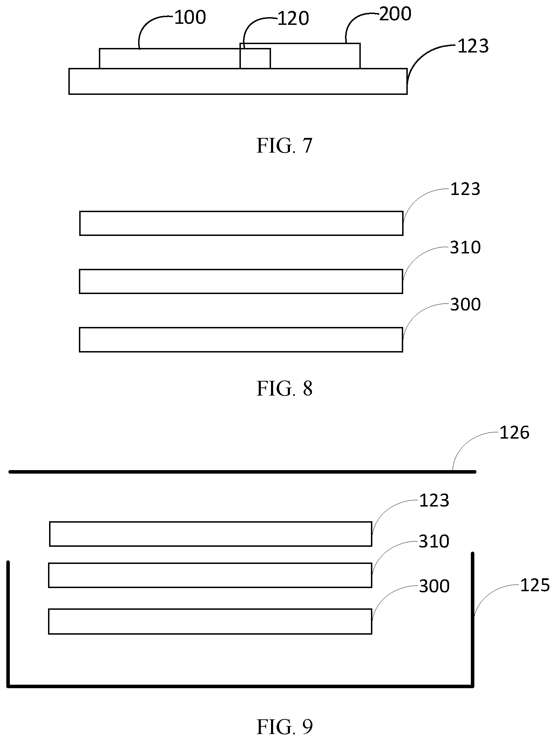

In some embodiments, as shown in FIG. 7, the low-voltage power distribution module 200 and the battery management module 100 are integrated on the same circuit board 123.

In these embodiments, since the battery management module 100 and the low-voltage power distribution module 200 share the same controller 120, the same controller 120 is used for the battery management module 100 and the low-voltage power distribution module 200. The controller 120 and some of its peripheral driver components form the battery management module 100 for managing a state of the low-voltage battery, and the controller 120 and others of its peripheral driver components form the low-voltage power distribution module 200 for controlling the power distribution of the low-voltage load connected to the low-voltage load access terminal 210. The low-voltage power distribution module 200 and the battery management module 100 are integrated on the same circuit board 123, and the controller 120 and its peripheral driver components that need to be controlled are integrated on the same circuit board. This avoids the problem that a large number of wiring harnesses are required to connect circuit boards when the battery management module 100 and the low-voltage power distribution module 200 are arranged independently. A simplified wiring reduces the probability of wiring failure.

In some embodiments, external pins and peripheral driver components of the controller 120 can form the low-voltage power distribution module 200 and the battery management module 100, and the external pins can also be expanded. For example, external expanded pins are welded and connected to an extended line of the circuit board 123 through multiple pads to implement function customization and shared use of the external expanded pins of the controller 120, thereby achieving the purpose of customizing functions of the vehicle.

In some embodiments, as shown in FIG. 8, the vehicle power distribution integration architecture further includes a vehicle radiator plate 310. The circuit board 123 is provided on a first side of the vehicle radiator plate 310, the low-voltage battery 300 is provided on a second side of the vehicle radiator plate 310, the second side of the vehicle radiator plate 310 is opposite the first side of the vehicle radiator plate 310, and the vehicle radiator plate 310 is configured to cool the circuit board 123 and the low-voltage battery 300.

In these embodiments, the low-voltage battery 300 and the circuit board 123 are arranged on two sides of the same vehicle radiator plate 310 respectively. The low-voltage battery 300 and the circuit board 123 share the same vehicle radiator plate 310, which can improve the cooling efficiency of the vehicle radiator plate 310 and reduce the volume of the vehicle.

In some embodiments, as shown in FIG. 9, the low-voltage battery assembly includes a lower product cover 125 and an upper product cover 126. The low-voltage battery 300 is provided in the lower product cover 125. The lower product cover 125 is of a concave structure, and the lower product cover 125 and the upper product cover 126 form an accommodating cavity. The circuit board 123 and the vehicle radiator plate 310 are provided above the low-voltage battery 300, and the circuit board 123 and the vehicle radiator plate 310 are fixed using mounting structures. The distances between the circuit board 123, the vehicle radiator plate 310, and the low-voltage battery 300 can be determined based on cooling and wiring requirements. In these embodiments, the battery management module 100, the low-voltage power distribution module 200, and the low-voltage battery 300 are integrated in the low-voltage battery assembly. A heat sink is provided on a side of the circuit board 123 close to the low-voltage battery 300, and the controller 120 between the battery management module 100 and the low-voltage power distribution module 200, as well as related power components, are welded on a side of the circuit board 123 close to the upper product cover 126. A shape of the upper product cover 126 is determined based on shapes of the controller 120 and related power components, so that the battery management module 100 and the low-voltage power distribution module 200 match the upper product cover 126 in shape. This not only reduces the volume of the vehicle low-voltage power distribution system, but also shortens the wiring distance between the low-voltage battery 300 and the battery management module 100 and the wiring distance between the low-voltage battery 300 and the low-voltage power distribution module 200, thereby reducing the probability of power supply failure and communication wiring failure in the vehicle low-voltage power distribution system.

In some embodiments, the vehicle radiator plate 310 may be a liquid cooling plate. The liquid cooling plate is arranged between the circuit board 123 and the low-voltage battery 300, so that after a vehicle is started, the heat generated by the low-voltage battery 300 and the circuit board 123 is absorbed by the liquid cooling plate. In this way, the space utilization efficiency inside the vehicle is improved and the size and volume of the vehicle management system are reduced.

In some embodiments, the controller 120 has at least two kernels.

In these embodiments, the controller 120 has at least two kernels, so multiple functions of the controller 120 can be assigned to multiple kernels, improving the processing efficiency of the controller 120.

In some embodiments, at least one kernel of the controller 120 is configured to process a sampling signal for obtaining sampling data, and at least one kernel of the controller 120 is configured to generate control data based on the sampling data, and output a corresponding control signal based on the control data to control an operating state of the low-voltage battery 300.

In these embodiments, the controller 120 includes at least two kernels. One or some of the kernels can be configured to process the sampling signal for obtaining corresponding sampling data, and the other one or others of the kernels can be configured to process the sampling data, obtain control data based on a preset operation, generate a control signal based on the control data, output the control signal to a peripheral driver component, and control the operating state of the low-voltage battery 300 by controlling the operating state of the driver component.

In some embodiments, at least one kernel of the controller 120 is configured to process a sampling signal for obtaining sampling data, and at least one kernel of the controller 120 is configured to generate control data based on the sampling data, and output a corresponding control signal based on the control data to control the distributed power of a low-voltage load.

In these embodiments, the controller 120 includes at least two kernels. One or some of the kernels can be configured to process the sampling signal for obtaining corresponding sampling data, and the other one or others of the kernels can be configured to process the sampling data, obtain control data based on a preset operation, generate a control signal based on the control data, output the control signal to a peripheral driver component, and control the distributed power of the low-voltage load by controlling the operating state of the driver component.

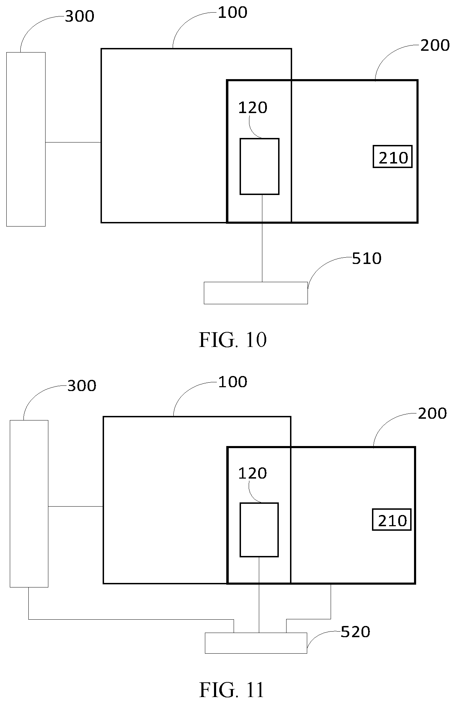

In some embodiments, as shown in FIG. 10, the vehicle power distribution integration architecture includes an SBC power supply module 510. The SBC power supply module 510 is connected to the controller 120, and the SBC power supply module 510 is configured to supply power to the controller 120.

In these embodiments, the SBC power supply module 510 in the vehicle power distribution integration architecture may be integrated in the battery management module 100 or the low-voltage power distribution module 200, and the power source of the SBC power supply module 510 may be the low-voltage battery 300. The SBC power supply module 510 is shared by the battery management module 100 and the low-voltage power distribution module 200, which can reduce the number of chips required by the vehicle power distribution integration architecture, reduce wiring harnesses in the vehicle power distribution integration architecture, and improve the stability of lines.

In some embodiments, a power source input terminal of the SBC power supply module 510 is connected to both the low-voltage battery 300 and the low-voltage power source input terminal 400, and a power source output terminal of the SBC power supply module 510 is connected to the controller 120.

In these embodiments, the power source input terminal of the SBC power supply module 510 can draw power from the low-voltage battery 300 or the low-voltage power source input terminal 400, and the voltage input from the low-voltage battery 300 or the low-voltage power source input terminal 400 is converted into a power supply voltage of the controller 120, so that power is supplied to the controller 120. This avoids the problem that the controller 120 requires an extra wiring harness for drawing power from an external power source.

In some embodiments, the power source input terminal of the SBC power supply module 510 may be connected to the low-voltage battery 300 and the low-voltage power source input terminal 400, one anti-backfill circuit is arranged between the power source input terminal of the SBC power supply module 510 and the low-voltage battery 300, and one anti-backfill circuit is arranged between the power source input terminal of the SBC power supply module 510 and the low-voltage power source input terminal 400. This can prevent current from back flowing when the low-voltage battery 300 and the low-voltage power source input terminal 400 output current, improving the safety of power supply circuits.

A system base chip (System Base Chip, SBC) supplies the operating voltage for the controller 120 and its peripheral components. The peripheral components of the controller cannot operate without power supply from the SBC. In these embodiments, the controller 120 and some power components form the battery management module 100, and the controller 120 and other power components form the low-voltage power distribution module 200. The controller 120 is integrated with the functions of managing the low-voltage battery 300 and controlling power distribution of the low-voltage load. Therefore, the SBC power supply module 510 outputs multiple voltages based on the input power source, and can supply power to the controller 120 and its peripheral power components. Only one SBC chip is required to supply power to the components of the low-voltage power distribution system of the entire vehicle. This not only reduces the number of SBC chips required, but also optimizes the power management solution of the low-voltage power distribution system to reduce the problems of unstable performance caused by inconsistent power supply voltages in the independent SBC solution, thereby improving the operation consistency between the power components and chips in the low-voltage power distribution system. For example, the SBC power supply module 510 can output an independent 3.3 V power source to the controller 120, an independent 3.3 V power source to an analog chip on the circuit board 123, and an independent 5 V power source to a communication chip on the circuit board 123. The SBC power supply module 510 has consistent power sources, improving the consistency of its output voltages.

In some embodiments, as shown in FIG. 11, the vehicle power distribution integration architecture further includes a sampling module 520. The sampling module 520 is configured to perform voltage sampling on sampling nodes of the low-voltage battery 300, battery management module 100, and low-voltage power distribution module 200 and generate sampling signals. The controller 120 is connected to the sampling module 520, and the controller 120 is further configured to control an operating state of the low-voltage battery 300 based on the sampling signals.

In these embodiments, sampling nodes are provided on the low-voltage battery 300, the battery management module 100, and the low-voltage power distribution module 200, and voltages of the sampling nodes are sampled to obtain sampling signals. The controller 120 determines, based on the received sampling signals, whether the voltages of the sampling nodes corresponding to the sampling signals satisfy the operating conditions of the current operating states, and thereby controls the operating state of the low-voltage battery 300, so that the low-voltage battery 300 can adjust the operating state of the low-voltage battery 300 in real time based on electrical parameters of the low-voltage power distribution module 200 and the low-voltage battery 300, reducing safety hazards caused by line faults.

In some embodiments, the sampling module 520 is configured to perform current sampling on sampling nodes of the low-voltage battery 300, battery management module 100, and low-voltage power distribution module 200 and generate sampling signals. The controller 120 is further configured to control an operating state of the low-voltage battery 300 based on the sampling signals.

In these embodiments, multiple sampling nodes are provided on the low-voltage battery 300, the battery management module 100, and the low-voltage power distribution module 200, and currents of the sampling nodes are sampled to obtain sampling signals. The controller 120 determines, based on the received sampling signals, whether the currents of the sampling nodes corresponding to the sampling signals satisfy the operating conditions of the current operating states, and thereby controls the operating state of the low-voltage battery 300, so that the low-voltage battery 300 can adjust its operating state in real time based on electrical parameters of the low-voltage power distribution module 200 and the low-voltage battery 300, reducing safety hazards caused by line faults.

In some embodiments, the low-voltage power distribution module 200 and the battery management module 100 are integrated on the same circuit board 123, and the low-voltage power distribution module 200 and the battery management module 100 are connected. In this way, sampling needs to be performed only on a common node of the low-voltage power distribution module 200 and the battery management module 100 to sample their output currents. As a result, at least one current sampling chip can be saved.

In some embodiments, the sampling module 520 is configured to perform current sampling and voltage sampling on sampling nodes of the low-voltage battery 300, battery management module 100, and low-voltage power distribution module 200 and generate sampling signals. The controller 120 is further configured to control an operating state of the low-voltage battery 300 based on the sampling signals.

In these embodiments, multiple sampling nodes are provided on the low-voltage battery 300, the battery management module 100, and the low-voltage power distribution module 200, and voltages or currents of the sampling nodes are sampled to obtain sampling signals. The controller 120 determines, based on the received sampling signals, whether the voltages or currents of the sampling nodes corresponding to the sampling signals satisfy the operating conditions of the current operating states, and thereby controls the operating state of the low-voltage battery 300, so that the low-voltage battery 300 can adjust its operating state in real time based on electrical parameters of the low-voltage power distribution module 200 and the low-voltage battery 300, reducing safety hazards caused by line faults or failure of the low-voltage battery 300.

In some embodiments, the sampling module 520 can also sample temperatures of multiple sampling nodes provided on the low-voltage battery 300, the battery management module 100, and the low-voltage power distribution module 200 to obtain corresponding sampling signals. The controller 120 determines, based on the received sampling signals, whether the temperatures of the sampling nodes corresponding to the sampling signals satisfy the operating conditions of the current operating states, and thereby controls the operating state of the low-voltage battery 300, so that the low-voltage battery can adjust its operating state in real time based on electrical parameters of the low-voltage power distribution module 200 and the low-voltage battery 300, reducing safety hazards caused by line faults.

In some embodiments, the controller 120 includes at least two kernels. After the same controller 120 is shared by the battery management module 100 and the low-voltage power distribution module 200, data collected by the sampling module 520 can be directly output to the controller 120 for centralized processing. This does not require an upper-level processor to deliver packets through a CAN bus and eliminates external influences, reducing the problem of information loss caused by packet failure.

In some embodiments, the controller 120 is further configured to control the operating state of the low-voltage power distribution module 200 based on the sampling signals.

In these embodiments, multiple sampling nodes are provided on the low-voltage battery 300, the battery management module 100, and the low-voltage power distribution module 200, and voltages or currents of the sampling nodes are sampled to obtain sampling signals. The controller 120 determines, based on the received sampling signals, whether the voltages or currents of the sampling nodes corresponding to the sampling signals satisfy the operating conditions of the current operating states, and thereby controls the operating state of the low-voltage battery 300, so that the low-voltage battery 300 can adjust the operating state of the low-voltage power distribution module 200 in real time based on electrical parameters of the low-voltage power distribution module 200 and the low-voltage battery 300, reducing safety hazards caused by line faults or failure of the low-voltage battery 300.

In some embodiments, in a case that multiple low-voltage electric loads are connected to the low-voltage load access terminal 210, the controller 120 controls multiple low-voltage load access terminals 210 of the low-voltage power distribution module 200 to be powered on in a time-sharing manner.

In these embodiments, the multiple low-voltage load access terminals of the low-voltage power distribution module 200 can be connected to the multiple low-voltage electric loads respectively. In a case that multiple low-voltage electric loads are connected, the controller 120 controls multiple low-voltage load access terminals to be powered on in a time-sharing manner. This can increase the output current of the low-voltage power distribution module 200 and avoid safety hazards caused by an excessively high output current due to simultaneous power-on of the multiple low-voltage load access terminals 210.

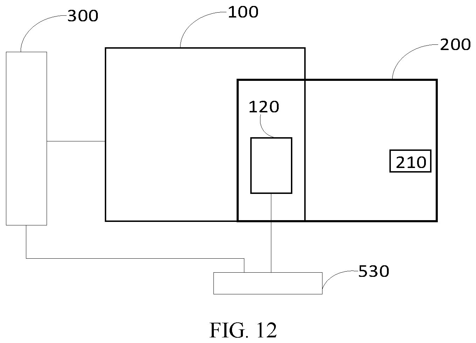

In some embodiments, as shown in FIG. 12, the vehicle power distribution integration architecture further includes an AFE module 530. The AFE module 530 is connected to both the low-voltage battery 300 and the controller 120, and the AFE module 530 is configured to collect information of the low-voltage battery 300 and exchange information with the controller 120.

In these embodiments, the AFE module 530 is connected to both the low-voltage battery 300 and the controller 120, and the AFE module 530 can be configured to collect information of the low-voltage battery 300 and exchange information with the controller 120.

In some embodiments, the controller 120 is connected to the AFE module 530 through a non-multiplexed synchronous serial communication interface.

In these embodiments, the controller 120 is connected to the AFE module 530 through the non-multiplexed synchronous serial communication interface, so that high-speed full-duplex communication can be established between the controller 120 and the AFE module 530, and data pins of the controller 120 execute data transmission of a specified type. For example, each communication module corresponds to one interactive function module, without being affected by other pins or modules.

In some embodiments, an output voltage of the low-voltage battery 300 ranges from 12 V to 72 V.

In some embodiments, the low-voltage battery 300 includes a 12-volt lithium-ion battery or sodium-ion battery, or another rechargeable battery.

In some embodiments, the low-voltage battery 300 includes a 24-volt lithium-ion battery or sodium-ion battery, or another rechargeable battery.

In some embodiments, the low-voltage battery 300 includes a 48-volt lithium-ion battery or sodium-ion battery, or another rechargeable battery.

In some embodiments, the low-voltage battery 300 includes a 72-volt lithium-ion battery or sodium-ion battery, or another rechargeable battery.

In these embodiments, the vehicle power distribution integration architecture according to these embodiments of this application can be applied to oil-fueled vehicles and new energy vehicles, where the output voltage of the low-voltage battery in the vehicle does not exceed 72 V.

An embodiment of this application further provides a vehicle management system, and the vehicle management system includes the vehicle power distribution integration architecture according to any one of the foregoing embodiments.

The vehicle management system in this embodiment can be applied to low-voltage batteries provided in oil-fueled vehicles and new energy vehicles, which are not limited to the field of passenger vehicles or commercial vehicles.

An embodiment of this application further provides a vehicle, and the vehicle includes the vehicle power distribution integration architecture according to any one of the foregoing embodiments.

In this embodiment, the vehicle power distribution integration architecture according to any one of the foregoing embodiments is integrated in a vehicle. In this way, the low-voltage power distribution module and the battery management module can be integrated in one structural member, and the low-voltage power distribution module and the battery management module share the same controller. This optimizes the electrical architecture of the vehicle management system, simplifies relevant components of the entire vehicle, and greatly reduces the cost of the entire vehicle.

Persons skilled in the art can clearly realize that, for ease and brevity of description, only division into the foregoing functional units or modules is used as an example for description. In actual application, the foregoing functions may be allocated, based on needs, to different functional units or modules for implementation. That is, an internal structure of the apparatus is divided into different functional units or modules to implement all or some of the functions described above. Functional units or modules in the embodiments of this application may be integrated into one processing unit, or each of the units may exist alone physically, or two or more units may be integrated into one unit. In addition, the specific names of functional units and modules are merely intended for distinguishing each other rather than limiting the protection scope of this application. The specific operation processes of the units or modules in the foregoing system can be learned with reference to the corresponding processes in the foregoing method embodiments, and will not be described herein again.

In the foregoing embodiments, the description of each embodiment has its own emphasis. Content that is not described in detail or recorded in an embodiment can be learned with reference to relevant descriptions of other embodiments.

In the embodiments provided in this application, it should be understood that the disclosed device and method may be implemented in other manners. For example, the electronic device embodiments described above are merely examples. For example, division into modules or units is merely a logical function division, and another division manner may be used during actual implementation. For another example, multiple units or components may be combined, or may be integrated into another system, or some features may be ignored or not performed. In addition, the displayed or discussed mutual couplings or direct couplings or communications connections may be implemented by using some interfaces. The indirect couplings or communications connections between apparatuses or units may be implemented in electrical, mechanical, or other forms.

Units described as separate components may or may not be physically separate. A component displayed as a unit may be one or more physical units, and may be located in one place, or may be distributed in multiple places. Some or all of the units may be selected based on actual requirements to achieve the objectives of the solutions of the embodiments.

In addition, functional units in the embodiments of this application may be integrated into one processing unit, or each of the units may exist alone physically, or two or more units may be integrated into one unit. The integrated unit may be implemented in a form of hardware, or may be implemented in a form of a software function unit. The foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions as defined in the appended claim set.

## Claims

1. A vehicle power distribution integration architecture (800),comprising a low-voltage battery (300), a battery management module (100), a low-voltage power distribution module (200), and a vehicle radiator plate (310); wherein
the low-voltage battery (300) is electrically connected to the low-voltage power distribution module (200);
the low-voltage power distribution module (200) is provided with a low-voltage load access terminal (210) for connecting to a low-voltage load; and
the battery management module (100) and the low-voltage power distribution module (200) share one controller (120), wherein the controller (120) is integrated with a function of managing the low-voltage battery (300) and a function of controlling power distribution of the low-voltage load, and the low-voltage power distribution module (200) and the battery management module (100) are integrated on one circuit board (123), wherein the circuit board (123) is provided on a first side of the vehicle radiator plate (310), the low-voltage battery (300) is provided on a second side of the vehicle radiator plate (310), the second side of the vehicle radiator plate (310) is opposite the first side of the vehicle radiator plate (310), and the vehicle radiator plate (310) is configured to cool the circuit board (123) and the low-voltage battery (300).

2. The vehicle power distribution integration architecture (800) according to claim 1, whereby the vehicle power distribution integration architecture (800) further comprises:
a low-voltage power source input terminal (400) electrically connected to the low-voltage power distribution module (200) and configured for connecting to a low-voltage power source obtained through conversion of a traction battery; and
the low-voltage power distribution module (200) is further configured to allocate power for the low-voltage power source.

3. The vehicle power distribution integration architecture (800) according to claim 2, whereby the battery management module (100) further comprises a first switch module (101) controlled by the controller (120); wherein
the first switch module (101) is configured to manage a charging/discharging process of the low-voltage battery (300) under the control of the controller (120).

4. The vehicle power distribution integration architecture (800) according to claim 3, whereby the low-voltage battery (300) is electrically connected to the low-voltage power distribution module (200) through the first switch module (101).

5. The vehicle power distribution integration architecture (800) according to claim 3, whereby the low-voltage power distribution module (200) further comprises a second switch module (202) controlled by the controller (120); wherein
the second switch module (202) is configured to control an input state of the low-voltage power source input terminal (400).

6. The vehicle power distribution integration architecture (800) according to claim 5, whereby the second switch module (202) is connected between the low-voltage power source input terminal (400) and the low-voltage load access terminal (210); and/or
the second switch module (202) is connected between the low-voltage power source input terminal (400) and the battery management module (100).

7. The vehicle power distribution integration architecture (800) according to claim 5, whereby the low-voltage power distribution module (200) further comprises a third switch module (203) controlled by the controller (120); wherein
the third switch module (203) is configured to control a direction of current between the low-voltage power source input terminal (400) and the low-voltage battery (300).

8. The vehicle power distribution integration architecture (800) according to claim 7, whereby the third switch module (203) is connected between the second switch module (202) and the first switch module (101);
or
whereby **characterized in that** the low-voltage load access terminal (210) comprises a first low-voltage load access terminal (211) and a second low-voltage load access terminal (212); wherein
the first low-voltage load access terminal (211) and the second low-voltage load access terminal (212) are connected to a first terminal and a second terminal of the third switch module (203) respectively, preferably,
wherein the low-voltage power distribution module (200) further comprises:
a fourth switch module (204) connected between the first terminal of the third switch module (203) and the first low-voltage load access terminal (211) and controlled by the controller (120); and
a fifth switch module (205) connected to the second terminal of the third switch module (203) and the second low-voltage load access terminal (212) and controlled by the controller (120).

9. The vehicle power distribution integration architecture (800) according to claim 1, whereby the controller (120) has at least two kernels; and preferably,
whereby at least one kernel of the controller (120) is configured to process a sampling signal for obtaining sampling data, and at least one kernel of the controller (120) is configured to generate control data based on the sampling data, and output a corresponding control signal based on the control data to control an operating state of the low-voltage battery (300) and/or control distributed power of the low-voltage load.

10. The vehicle power distribution integration architecture (800) according to claim 1, whereby the vehicle power distribution integration architecture (800) comprises:
an SBC power supply module (510) connected to the controller (120) and configured to supply power to the controller (120); and preferably,
whereby a power source input terminal of the SBC power supply module (510) is connected to the low-voltage battery (300) and/or the low-voltage power source input terminal (400), and a power source output terminal of the SBC power supply module (510) is connected to the controller (120).

11. The vehicle power distribution integration architecture (800) according to claim 1, whereby the vehicle power distribution integration architecture (800) further comprises:
a sampling module (520) configured to perform voltage sampling and/or current sampling on sampling nodes of the low-voltage battery (300), battery management module (100), and low-voltage power distribution module (200) and generate sampling signals; wherein
the controller (120) is connected to the sampling module (520), and the controller (120) is further configured to control an operating state of the low-voltage battery (300) and/or low-voltage power distribution module (200) based on the sampling signals; and preferably,
whereby in a case that multiple low-voltage electric loads are connected to the low-voltage load access terminal (210), the controller (120) controls multiple low-voltage load access terminals (210) of the low-voltage power distribution module (200) to be powered on in a time-sharing manner.

12. The vehicle power distribution integration architecture (800) according to claim 1, whereby the vehicle power distribution integration architecture (800) further comprises an AFE module (530) connected to the low-voltage battery (300) and the controller (120) and configured to collect information of the low-voltage battery (300) and exchange information with the controller (120); wherein the controller (120) is connected to the AFE module (530) through a non-multiplexed synchronous serial communication interface.

13. A vehicle management system, whereby the vehicle management system comprises the vehicle power distribution integration architecture (800) according to any one of claims 1 to 12.

## Patentansprüche

1. Fahrzeugleistungsverteilungs-Integrationsarchitektur (800), die eine Niederspannungsbatterie (300), ein Batteriemanagementmodul (100), ein Niederspannungs-Leistungsverteilungsmodul (200) und eine Fahrzeugkühlerplatte (310) umfasst; wobei
die Niederspannungsbatterie (300) mit dem Niederspannungs-Leistungsverteilungsmodul (200) elektrisch verbunden ist;
das Niederspannungs-Leistungsverteilungsmodul (200) mit einem Niederspannungs-Lastzugriffsanschluss (210) zum Verbinden mit einer Niederspannungslast versehen ist; und
das Batteriemanagementmodul (100) und das Niederspannungs-Leistungsverteilungsmodul (200) eine Steuereinheit (120) gemeinsam nutzen, wobei die Steuereinheit (120) mit einer Funktion zum Managen der Niederspannungsbatterie (300) und mit einer Funktion zum Steuern der Leistungsverteilung der Niederspannungslast integriert ist und wobei das Niederspannungs-Leistungsverteilungsmodul (200) und das Batteriemanagementmodul (100) auf einer Leiterplatte (123) integriert sind, wobei die Leiterplatte (123) auf einer ersten Seite der Fahrzeugkühlerplatte (310) vorgesehen ist, wobei die Niederspannungsbatterie (300) auf einer zweiten Seite der Fahrzeugkühlerplatte (310) vorgesehen ist, wobei die zweite Seite der Fahrzeugkühlerplatte (310) der ersten Seite der Fahrzeugkühlerplatte (310) gegenüberliegt und wobei die Fahrzeugkühlerplatte (310) konfiguriert ist, die Leiterplatte (123) und die Niederspannungsbatterie (300) zu kühlen.

2. Fahrzeugleistungsverteilungs-Integrationsarchitektur (800) nach Anspruch 1, wobei die Fahrzeugleistungsverteilungs-Integrationsarchitektur (800) ferner Folgendes umfasst:
einen Niederspannungs-Leistungsquellen-Eingangsanschluss (400), der mit dem Niederspannungs-Leistungsverteilungsmodul (200) elektrisch verbunden ist und konfiguriert ist, mit einer Niederspannungsleistungsquelle, die durch Umwandlung von einer Traktionsbatterie erhalten wird, zu verbinden; und
das Niederspannungs-Leistungsverteilungsmodul (200) ferner konfiguriert ist, Leistung für die Niederspannungsleistungsquelle zuzuweisen.

3. Fahrzeugleistungsverteilungs-Integrationsarchitektur (800) nach Anspruch 2, wobei das Batteriemanagementmodul (100) ferner ein erstes Schaltmodul (101), das durch die Steuereinheit (120) gesteuert wird, umfasst; wobei
das erste Schaltmodul (101) konfiguriert ist, einen Lade/Entlade-Prozess der Niederspannungsbatterie (300) gemäß der Steuerung der Steuereinheit (120) zu managen.

4. Fahrzeugleistungsverteilungs-Integrationsarchitektur (800) nach Anspruch 3, wobei die Niederspannungsbatterie (300) mit dem Niederspannungs-Leistungsverteilungsmodul (200) über das erste Schaltmodul (101) elektrisch verbunden ist.

5. Fahrzeugleistungsverteilungs-Integrationsarchitektur (800) nach Anspruch 3, wobei das Niederspannungs-Leistungsverteilungsmodul (200) ferner ein zweites Schaltmodul (202), das durch die Steuereinheit (120) gesteuert wird, umfasst; wobei
das zweite Schaltmodul (202) konfiguriert ist, einen Eingangszustand des Niederspannungs-Leistungsquellen-Eingangsanschlusses (400) zu steuern.

6. Fahrzeugleistungsverteilungs-Integrationsarchitektur (800) nach Anspruch 5, wobei das zweite Schaltmodul (202) zwischen dem Niederspannungs-Leistungsquellen-Eingangsanschluss (400) und dem Niederspannungs-Lastzugriffsanschluss (210) verbunden ist; und/oder
das zweite Schaltmodul (202) zwischen dem Niederspannungs-Leistungsquellen-Eingangsanschluss (400) und dem Batteriemanagementmodul (100) verbunden ist.

7. Fahrzeugleistungsverteilungs-Integrationsarchitektur (800) nach Anspruch 5, wobei das Niederspannungs-Leistungsverteilungsmodul (200) ferner ein drittes Schaltmodul (203), das durch die Steuereinheit (120) gesteuert wird, umfasst; wobei
das dritte Schaltmodul (203) konfiguriert ist, eine Richtung des Stroms zwischen dem Niederspannungs-Leistungsquellen-Eingangsanschluss (400) und der Niederspannungsbatterie (300) zu steuern.

8. Fahrzeugleistungsverteilungs-Integrationsarchitektur (800) nach Anspruch 7, wobei das dritte Schaltmodul (203) zwischen dem zweiten Schaltmodul (202) und dem ersten Schaltmodul (101) verbunden ist; oder
wobei
**dadurch gekennzeichnet, dass** der Niederspannungs-Lastzugriffsanschluss (210) einen ersten Niederspannungs-Lastzugriffsanschluss (211) und einen zweiten Niederspannungs-Lastzugriffsanschluss (212) umfasst; wobei
der erste Niederspannungs-Lastzugriffsanschluss (211) und der zweite Niederspannungs-Lastzugriffsanschluss (212) mit einem ersten Anschluss bzw. mit einem zweiten Anschluss des dritten Schaltmoduls (203) verbunden sind, wobei vorzugsweise
das Niederspannungs-Leistungsverteilungsmodul (200) ferner Folgendes umfasst:
ein viertes Schaltmodul (204), das zwischen dem ersten Anschluss des dritten Schaltmoduls (203) und dem ersten Niederspannungs-Lastzugriffsanschluss (211) verbunden ist und durch die Steuereinheit (120) gesteuert wird; und
ein fünftes Schaltmodul (205), das mit dem zweiten Anschluss des dritten Schaltmoduls (203) und mit dem zweiten Niederspannungs-Lastzugriffsanschluss (212) verbunden ist und durch die Steuereinheit (120) gesteuert wird.

9. Fahrzeugleistungsverteilungs-Integrationsarchitektur (800) nach Anspruch 1, wobei die Steuereinheit (120) wenigstens zwei Kerne aufweist; und wobei vorzugsweise
wenigstens ein Kern der Steuereinheit (120) konfiguriert ist, ein Abtastsignal zu verarbeiten, um Abtastdaten zu erhalten, und wobei wenigstens ein Kern der Steuereinheit (120) konfiguriert ist, auf der Grundlage der Abtastdaten Steuerdaten zu erzeugen und auf der Grundlage der Steuerdaten ein entsprechendes Steuersignal auszugeben, um einen Betriebszustand der Niederspannungsbatterie (300) zu steuern und/oder verteilte Leistung der Niederspannungslast zu steuern.

10. Fahrzeugleistungsverteilungs-Integrationsarchitektur (800) nach Anspruch 1, wobei die Fahrzeugleistungsverteilungs-Integrationsarchitektur (800) Folgendes umfasst:
ein SBC-Leistungsversorgungsmodul (510), das mit der Steuereinheit (120) verbunden ist und konfiguriert ist, der Steuereinheit (120) Leistung zuzuführen; und wobei vorzugsweise
ein Leistungsquellen-Eingangsanschluss des SBC-Leistungsversorgungsmoduls (510) mit der Niederspannungsbatterie (300) und/oder mit dem Niederspannungs-Leistungsquellen-Eingangsanschluss (400) verbunden ist und wobei ein Leistungsquellen-Ausgangsanschluss des SBC-Leistungsversorgungsmoduls (510) mit der Steuereinheit (120) verbunden ist.

11. Fahrzeugleistungsverteilungs-Integrationsarchitektur (800) nach Anspruch 1, wobei die Fahrzeugleistungsverteilungs-Integrationsarchitektur (800) ferner Folgendes umfasst:
ein Abtastmodul (520), das konfiguriert ist, an Abtastknoten der Niederspannungsbatterie (300), des Batteriemanagementmoduls (100) und des Niederspannungs-Leistungsverteilungsmoduls (200) eine Spannungsabtastung und/oder Stromabtastung auszuführen und Abtastsignale zu erzeugen; wobei
die Steuereinheit (120) mit dem Abtastmodul (520) verbunden ist und wobei die Steuereinheit (120) ferner konfiguriert ist, einen Betriebszustand der Niederspannungsbatterie (300) und/oder des Niederspannungs-Leistungsverteilungsmoduls (200) auf der Grundlage der Abtastsignale zu steuern; und wobei vorzugsweise
die Steuereinheit (120) mehrere Niederspannungs-Lastzugriffsanschlüsse (210) des Niederspannungs-Leistungsverteilungsmoduls (200) steuert, damit sie auf Timesharing-Art eingeschaltet werden, falls mit dem Niederspannungs-Lastzugriffsanschluss (210) mehrere elektrische Niederspannungslasten verbunden sind.

12. Fahrzeugleistungsverteilungs-Integrationsarchitektur (800) nach Anspruch 1, wobei die Fahrzeugleistungsverteilungs-Integrationsarchitektur (800) ferner ein AFE-Modul (530) umfasst, das mit der Niederspannungsbatterie (300) und mit der Steuereinheit (120) verbunden ist und das konfiguriert ist, Informationen der Niederspannungsbatterie (300) zu erheben und Informationen mit der Steuereinheit (120) auszutauschen; wobei die Steuereinheit (120) über eine nicht multiplexierte synchrone serielle Kommunikationsschnittstelle mit der AFE-Modul (530) verbunden ist.

13. Fahrzeugmanagementsystem, wobei das Fahrzeugmanagementsystem die Fahrzeugleistungsverteilungs-Integrationsarchitektur (800) nach einem der Ansprüche 1 bis 12 umfasst.

## Revendications

1. Architecture d'intégration de distribution d'alimentation de véhicule (800), comprenant une batterie basse tension (300), un module de gestion de batterie (100), un module de distribution d'alimentation basse tension (200), et une plaque de radiateur de véhicule (310) ;
la batterie basse tension (300) étant connectée électriquement au module de distribution d'alimentation basse tension (200) ;
le module de distribution d'alimentation basse tension (200) étant pourvu d'une borne d'accès de charge basse tension (210) destinée à être connectée à une charge basse tension ; et
le module de gestion de batterie (100) et le module de distribution d'alimentation basse tension (200) partageant un même contrôleur (120), le contrôleur (120) étant intégré à une fonction de gestion de la batterie basse tension (300) et à une fonction de commande de la distribution d'alimentation de la charge basse tension, et le module de distribution d'alimentation basse tension (200) et le module de gestion de batterie (100) étant intégrés sur une même carte de circuit imprimé (123), la carte de circuit imprimé (123) étant disposée sur un premier côté de la plaque de radiateur de véhicule (310), la batterie basse tension (300) étant disposée sur un deuxième côté de la plaque de radiateur de véhicule (310), le deuxième côté de la plaque de radiateur de véhicule (310) étant opposé au premier côté de la plaque de radiateur de véhicule (310), et la plaque de radiateur de véhicule (310) étant configurée pour refroidir la carte de circuit imprimé (123) et la batterie basse tension (300).

2. Architecture d'intégration de distribution d'alimentation de véhicule (800) selon la revendication 1, l'architecture d'intégration de distribution d'alimentation de véhicule (800) comprenant en outre :
une borne d'entrée de source d'alimentation basse tension (400) connectée électriquement au module de distribution d'alimentation basse tension (200) et configurée pour être connectée à une source d'alimentation basse tension obtenue par conversion d'une batterie de traction ; et
le module de distribution d'alimentation basse tension (200) étant en outre configuré pour allouer l'alimentation pour la source d'alimentation basse tension.

3. Architecture d'intégration de distribution d'alimentation de véhicule (800) selon la revendication 2, dans laquelle le module de gestion de batterie (100) comprend en outre un premier module de commutation (101) commandé par le contrôleur (120) ;
le premier module de commutation (101) étant configuré pour gérer un processus de charge/décharge de la batterie basse tension (300) sous la commande du contrôleur (120).

4. Architecture d'intégration de distribution d'alimentation de véhicule (800) selon la revendication 3, dans laquelle la batterie basse tension (300) est connectée électriquement au module de distribution d'alimentation basse tension (200) par l'intermédiaire du premier module de commutation (101).

5. Architecture d'intégration de distribution d'alimentation de véhicule (800) selon la revendication 3, dans laquelle le module de distribution d'alimentation basse tension (200) comprend en outre un deuxième module de commutation (202) commandé par le contrôleur (120) ; le deuxième module de commutation (202) étant configuré pour commander un état d'entrée de la borne d'entrée de source d'alimentation basse tension (400).

6. Architecture d'intégration de distribution d'alimentation de véhicule (800) selon la revendication 5, dans laquelle le deuxième module de commutation (202) est connecté entre la borne d'entrée de source d'alimentation basse tension (400) et la borne d'accès de charge basse tension (210) ; et/ou
le deuxième module de commutation (202) est connecté entre la borne d'entrée de source d'alimentation basse tension (400) et le module de gestion de batterie (100).

7. Architecture d'intégration de distribution d'alimentation de véhicule (800) selon la revendication 5, dans laquelle le module de distribution d'alimentation basse tension (200) comprend en outre un troisième module de commutation (203) commandé par le contrôleur (120) ; le troisième module de commutation (203) étant configuré pour commander un sens du courant entre la borne d'entrée de source d'alimentation basse tension (400) et la batterie basse tension (300).

8. Architecture d'intégration de distribution d'alimentation de véhicule (800) selon la revendication 7, dans laquelle le troisième module de commutation (203) est connecté entre le deuxième module de commutation (202) et le premier module de commutation (101) ;
ou
dans laquelle
**caractérisée en ce que** la borne d'accès de charge basse tension (210) comprend une première borne d'accès de charge basse tension (211) et une deuxième borne d'accès de charge basse tension (212) ;
la première borne d'accès de charge basse tension (211) et la deuxième borne d'accès de charge basse tension (212) étant connectées respectivement à une première borne et à une deuxième borne du troisième module de commutation (203), de préférence,
le module de distribution d'alimentation basse tension (200) comprenant en outre :
un quatrième module de commutation (204) connecté entre la première borne du troisième module de commutation (203) et la première borne d'accès de charge basse tension (211) et commandé par le contrôleur (120) ; et
un cinquième module de commutation (205) connecté à la deuxième borne du troisième module de commutation (203) et à la deuxième borne d'accès de charge basse tension (212) et commandé par le contrôleur (120).

9. Architecture d'intégration de distribution d'alimentation de véhicule (800) selon la revendication 1, dans laquelle le contrôleur (120) possède au moins deux noyaux ; et, de préférence,
dans laquelle au moins un noyau du contrôleur (120) est configuré pour traiter un signal d'échantillonnage pour l'obtention de données d'échantillonnage, et au moins un noyau du contrôleur (120) est configuré pour générer des données de commande sur la base des données d'échantillonnage, et délivrer un signal de commande correspondant sur la base des données de commande afin de commander un état de fonctionnement de la batterie basse tension (300) et/ou de commander l'alimentation distribuée de la charge basse tension.

10. Architecture d'intégration de distribution d'alimentation de véhicule (800) selon la revendication 1, l'architecture d'intégration de distribution d'alimentation de véhicule (800) comprenant :
un module d'alimentation électrique SBC (510) connecté au contrôleur (120) et configuré pour alimenter électriquement le contrôleur (120) ; et, de préférence,
dans laquelle une borne d'entrée de source d'alimentation du module d'alimentation électrique SBC (510) est connectée à la batterie basse tension (300) et/ou à la borne d'entrée de source d'alimentation basse tension (400), et une borne de sortie de source d'alimentation du module d'alimentation électrique SBC (510) est connectée au contrôleur (120).

11. Architecture d'intégration de distribution d'alimentation de véhicule (800) selon la revendication 1, l'architecture d'intégration de distribution d'alimentation de véhicule (800) comprenant en outre :
un module d'échantillonnage (520) configuré pour réaliser un échantillonnage de tension et/ou un échantillonnage de courant sur des nœuds d'échantillonnage de la batterie basse tension (300), du module de gestion de batterie (100), et du module de distribution d'alimentation basse tension (200), et pour générer des signaux d'échantillonnage ;
le contrôleur (120) étant connecté au module d'échantillonnage (520), et le contrôleur (120) étant en outre configuré pour commander un état de fonctionnement de la batterie basse tension (300) et/ou du module de distribution d'alimentation basse tension (200) sur la base des signaux d'échantillonnage ; et, de préférence,
dans laquelle, dans le cas où plusieurs charges électriques basse tension sont connectées à la borne d'accès de charge basse tension (210), le contrôleur (120) commande la mise sous tension en temps partagé de plusieurs bornes d'accès de charge basse tension (210) du module de distribution d'alimentation basse tension (200).

12. Architecture d'intégration de distribution d'alimentation de véhicule (800) selon la revendication 1, l'architecture d'intégration de distribution d'alimentation de véhicule (800) comprenant en outre un module AFE (530) connecté à la batterie basse tension (300) et au contrôleur (120), et configuré pour collecter des informations de la batterie basse tension (300) et échanger des informations avec le contrôleur (120) ; le contrôleur (120) étant connecté au module AFE (530) par l'intermédiaire d'une interface de communication série synchrone non multiplexée.

13. Système de gestion de véhicule, le système de gestion de véhicule comprenant l'architecture d'intégration de distribution d'alimentation de véhicule (800) selon l'une quelconque des revendications 1 à 12.
